# EUROPEAN PATENT SPECIFICATION

(11) **EP 1 196 845 B1**
(45) Date of publication and mention of the grant of the patent: **12.02.2003**
(21) Application number: 00944057.9
(22) Date of filing: 22.06.2000
(51) Int. Cl.: G06F 9/44, H04L 29/10, H04L 12/46

(54) **SESSION MANAGEMENT**
SITZUNGSVERWALTUNG
GESTION DE SESSIONS

(30) Priority: 24.06.1999 FI 991451
(43) Date of publication of application: 17.04.2002
(73) Proprietor: Nokia Corporation, 02150 Espoo (FI)
(72) Inventor: TOTH, Mihály, H-1203 Budapest (HU); CASAIS, Eduardo, FIN-02130 Espoo (FI)
(74) Representative: Walker, Andrew John
(86) International application number: FI0000572
(87) International publication number: WO01001244

(56) References cited:
- EP-A- 0 926 590
- US-A- 5 745 778
- US-A- 5 835 705
- US-A- 5 850 399
- US-A- 5 961 639
- US-A- 6 098 093

## Description

The present invention relates to management of sessions between a server and a plurality of terminals and is particularly, but not exclusively, related to management of sessions between a server and a plurality of mobile terminals. It is particularly suitable for a mobile protocol for enabling a mobile terminal to access the Internet.

The term "Internet" is commonly used to describe information, content, which can be accessed using a terminal, typically a PC, usually connected via a modem, to a telecommunications network, The content can be stored at many different sites remote from the accessing computer, although each of the remote sites is also linked to the telecommunications network. The content can be structured using Hypertext Mark-up Language (HTML). The Internet is made workable by the specification of a standard communications system which makes use of a number of protocols, such as the Transfer Control Protocol (TCP), the User Datagram Protocol (UDP), and the Internet Protocol (IP), to control the flow of data around the numerous different components of the Internet. TCP and UDP are concerned with the transmission of Internet data with different quality of service characteristics, such as in-order, reliable delivery of data, or unreliable delivery of independent data packets. IP is concerned with the structuring and routing of data. On top of that, other application specific protocols may be provided to manage and manipulate the various kinds of information available via the Internet, for example HTTP to access HTML content, FTP to access files or SMTP to access e-mail.

The Internet is physically constructed from a hierarchy of telecommunication and data communication networks, for example local area networks (LANs), regional telephone networks, and international telephone networks. These networks are connected internally and externally by so-called "routers" which receive data from a source host, or a previous router in a transmission chain, and route it to the destination host or the next router in the transmission chain.

US 5 835 705 discloses a method and a system for performance measuring within a multithreaded processor. The system includes a processor responsive to instructions within first and second threads and a performance monitor that separately records a first event generated by the processor in response to the first thread and a second event generated by the processor in response to the second thread. The performance monitor comprises first and second counters which are incremented in response to occurrences of the first and second events respectively.

US 5 850 399 discloses a method of scheduling transmission of packets from a plurality of sessions. A session is grouped into one of a plurality of classes depending on the quality of service (QoS) which is provided for that session.

With increased use of mobile cellular telephones, there is a growing demand for so-called mobile Internet access, in which access is made from a portable computer connected to a cellular telephone or from an integrated computer/cellular phone device. Typically, the purpose of such access is to obtain content from the Internet. It has also been proposed to provide Internet access to advanced mobile terminals, so-called communicators and smart phones, by means of the Wireless Application Protocol (WAP), for example. WAP has an architecture in which an application layer (called the Wireless Application Environment or WAE) uses a protocol stack comprising a session layer (called the Wireless Session Protocol or WSP), a transaction layer (called the Wireless Transaction Protocol or WTP), a security layer (called Wireless Transport Layer Security or WTLS) and a transport layer (called the Wireless Datagram Protocol or WDP). Each of the layers of the architecture is accessible by the layers above as well as by other services and applications. These protocols are designed to operate over a variety of different bearer services. A specification describing this architecture and the protocol layers is available from http//www.wapforum.org/.

Obtaining access to the Internet generally involves having sessions between a terminal, such as a mobile terminal, and a server. A session is a series of interactions between a terminal and a server having a well-defined beginning and end and involving agreed-upon characteristics. Typically, a session involves a peer announcing to another peer a desire to establish a session, both peers negotiating the characteristics of the session, the peers engaging in a variety of transactions and one of the peers ending the session. The characteristics which are negotiated are typically the length of packets to be exchanged, the character sets which can be understood and manipulated and the versions of protocols which are to be used. A transaction is a basic unit of interaction and may include requesting and receiving information, aborting an ongoing session and informing a peer of a situation in an on-going session. All session operations to establish and terminate a session as well as all transactions result in events being generated and received by the peer. There are many event sources (sessions and transactions).

The operations which an application can invoke to generate events are called service primitives. Service primitives represent the logical exchange of information and control between a protocol layer and another entity using it, and especially between the session layer and the application environment (WAE). They consist of commands and their respective responses associated with the particular service provided. Invoking a service primitive in a peer on one side of a communication link results in an event being generated in a peer in the other side of the link. Service primitives are present in all communication protocols and form the basis for specification formalisms used by the ITU-T and ETSI.

An active session can involve multiple transactions and so can generate multiple events. Depending on the speed at which an application can process events coming from its peer, it can happen that there are more transactions than it can process and so it receives more events than it can process. In this case, the events are queued up and wait to be processed within the context of that session. Events connected or related to the same session generally need to be processed in a specific order. In some protocols, a session can be suspended, in which state no transactions are allowed except a request to resume or to terminate the session.

In WAP, communication between layers is also accomplished by means of service primitives.

Most transactions are either of the push type or of the pull (request-reply) type. In push type transactions a peer sends information which has not been specifically requested and in pull type transactions, a peer specifically requests to receive information from another peer.

Terminals, such as personal computers, obtain information from the Internet through a server, such as a gateway server. The Internet uses HTTP which is a simple request-reply protocol. Almost the only events are an HTTP request and its associated response. The operating system of the server runs a number of applications and so creates a number of threads to deal with them, for example proxies and mail servers. The applications use the available threads as they are required. In the case of Internet access by a PC, it is convenient to create a thread in the server dynamically to deal with each request because the requests are independent from each other. Once the request has been processed, the thread has finished its activity and is terminated. Creating and terminating threads is a big overhead to the server.

A thread is basically a path of execution through a program and can be the smallest unit of execution that is scheduled on a processor. A thread consists of a stack, the state of the CPU registers, and an entry in the execution list of the system scheduler.

A thread is a single sequential flow of execution in program code and has a single point of execution. To deal with a simple process, a program comprising a single thread can be used. For more complex processes which involve running a number of applications, a program can rely on a number of threads. Operating systems usually provide thread management for the application (creation, termination and specifying the entry point: at the start of the program code).

A process consists of one or more threads and the code, data, and other resources of a program in memory. Typical program resources are open files, semaphores, and dynamically allocated memory. Each thread shares all of the resources of the process. A program executes when the system scheduler gives one of its threads execution control. The scheduler determines which threads should run and when they should run. Threads of lower priority may have to wait while higher priority threads complete their tasks. On multiprocessor machines, the scheduler can move individual threads to different processors to "balance" the load on the central processing unit.

Each thread in a process operates independently. Unless they are made visible to each other, the threads execute individually and are unaware of the other threads in a process. Threads sharing common resources, however, must co-ordinate their work, for example by using semaphores or another method of inter-process communication.

In a communication system comprising a gateway server and a plurality of mobile terminals, establishing a session requires a relatively large amount of bandwidth because a terminal and a server must negotiate many characteristics relevant to the session. Furthermore, information which is unique to a particular opened session may be lost if the session is terminated. This unique information could have been negotiated as a result of transactions. For example, it may be the status of a game. In order to avoid opening and closing sessions on demand and establishing new sessions whenever they are needed, the sessions may be kept open for a long time, even in an inactive state, so that they can be resumed when needed. A session can remain open for days or even weeks until it is closed or until the terminal no longer receives power, for example from a battery. The state of a session can be preserved and kept alive even after switching the terminal off. In this case, the session state can be saved to persistent memory or a SIM card before turning the power off. Of course, although the session is still alive, is not active afterwards. As a consequence, a gateway server serving a large number of mobile terminals needs to be able to manage a very large number of sessions indeed. The gateway may serve tens of thousands of mobile terminals or even in the region of a million mobile terminals. Generally a mobile will have one session open at one time (although there may be more), and so there can be in the region of one million sessions open at one time on the server.

An application in the server will use the operating system thread management service and create a number of threads to manage these sessions. However, a gateway server has difficulty dealing with such a large number of sessions. The number of event sources is much larger than the number of threads. Since most of the sessions are inactive, only a fraction of them have events at any particular time. Therefore assigning one thread to each session is an inefficient use of system resources. On the other hand, having only one thread to handle all events of all sessions is also inefficient because the thread may not process the events more quickly than they are generated in the protocol stack.

If several threads are allocated to the same session, then there is a risk that two events of the same session can be dealt with by the same thread at the same time or that the same session can be designated to two different threads at the same time. If two events of the same session are processed concurrently by different threads, this may result in inconsistencies. For example, resumption of a session might be processed faster than its suspension (even though the suspension instruction arrived before the resumption instruction). Alternatively, there may be a code fraction which handles the suspension of a session and a code fraction which handles the resumption of that session. These fractions are in the server application. If both code fractions are able to modify the same data area concurrently so that one thread runs the suspension one thread runs the resumption, this could cause inconsistent data structures since the data would be manipulated by both code fractions at the same time. It is difficult to provide programs which are able to deal with such inconsistencies.

According to a first aspect of the invention there is provided a method of managing a plurality of sessions the sessions being between a plurality of terminals and a server having a plurality of threads, the method comprising:
grouping the sessions into a plurality of groups; and
assigning a thread to each group of sessions.

The invention is able to optimise the load of the system handling the communication by reducing the number of threads needed to process the various sessions. It can also enable spreading the load of sessions across the threads. As a result, a huge numbers of sessions can be dealt with.

Preferably the grouping step occurs when a session is created. Alternatively it occurs when a session becomes active. Preferably the sessions are grouped by a thread, referred to as an acceptor thread.

According to a second aspect of the invention there is provided a server for managing a plurality of sessions with a plurality of terminals the server comprising a plurality of threads, grouping means to group the sessions into a plurality of groups and assigning means to assign a thread to each group of sessions.

The term server includes origin servers where a resource resides or is created, gateways (servers acting as intermediaries for origin servers), proxies (intermediaries between any kinds of servers) and combinations of origin servers, gateways and proxies. A gateway is a node between two or more networks or between two parts of the same network which use different communication protocols.

In one particular embodiment, the invention comprises a gateway server serving a plurality of mobile terminals. It may be a WAP-HTTP gateway. For example, commands, such as WAP requests, may be sent to a WAP/HTTP gateway. The gateway will interpret these as WAP network packets and will perform the necessary HTTP transactions on an origin server. After that it sends back the result.

According to a third aspect of the invention there is provided a communications system comprising a server and a plurality of terminals the server and the terminals conducting a plurality of sessions the server comprising a plurality of threads, grouping means to group the sessions into a plurality of groups and assigning means to assign at least one thread to each group of sessions.

Preferably, the invention relates to long-lived sessions, in some cases some of the sessions are alive for as long as months.

Preferably one group is provided for each thread so that there are equal numbers of groups and threads. The thread assigned to each group only handles the events of the sessions of that group. This prevents two events of the same session being handled by two different threads. The invention allows one thread to be used to deal with many sessions whilst avoiding inconsistencies that can otherwise arise in processing events concurrently. In an alternative embodiment a session can be put into a first group in a first time period before suspension and put into a second group in a second time period following resumption. The second group can be chosen randomly or on the basis of pre-determined selection criteria, for example based upon the relative levels of activity of the groups.

Preferably each group has a queue and each session (and transactions of that session) puts its events into that queue. The events may be dealt with in an order determined by the time at which they are generated.

In one embodiment of the invention, the sessions associated with an application are contained within a meta-session. On creation of a new session, a special thread, referred to as an acceptor thread may receive a notification message from the meta-session. The acceptor thread may call a function which may be answered by notification that a new session has been created. Preferably the new session is then assigned to a particular session group by the acceptor thread. After that, the events of that session may be sent to, and dealt with by, the thread assigned to that group. Therefore, the server can control the assignment mechanism of the sessions and select such load balancing mechanism as is desired or is appropriate, for example circular assignment. This provides the advantage that the load can be spread among the threads.

In a method according to the invention, it is not necessary to create threads dynamically when there are events in a session group. A thread can simply be assigned to a session group and wait until there are events to be processed. The thread may call a blocking function which returns with the next event to be processed.

Typically there may be a few, several tens of, one hundred or several hundred threads. The number of threads is chosen to optimise resource usage of a machine. There may be a single processor or tens of processors.

Preferably the terminals comprise mobile terminals. Most preferably the terminals comprise cellular telephones.

Preferably the sessions involve obtaining information or conducting transactions. Most preferably they occur between the terminals and sources obtainable through public networks, such as through the Internet.

Preferably the sessions are part of a communication protocol. Most preferably the sessions are part of the Wireless Session Protocol (WSP). However, the invention is not restricted to WSP, and may be of general applicability.

According to a fourth aspect of the invention there is provided a computer program product for managing a plurality of sessions the sessions being between a plurality of terminals and a server having a plurality of threads, comprising:
computer readable program means for grouping the sessions into a plurality of groups; and
computer readable program means for assigning a thread to each group of sessions.

Preferably the computer program product is stored on a computer readable medium.

The invention allows simple applications which do not require mutual exclusions and other mechanisms to protect the sessions, events, associated queues and related information and data structures from concurrent access. Therefore, the invention provides high performance because there is no need to provide a complex computing mechanism which would slow delivery of the events. It ensures that events of a session can be handled only by one particular thread and consistent handling of data occurs.

In the case of a protocol which allows long-lived sessions, grouping provides a solution for gaining extra performance from statically creating threads, that is, where a fixed or limited number of threads is available.

An embodiment of the invention will now be described by way of example only with reference to the accompanying drawings in which:
Figure 1 shows a communication system;
Figure 2 shows a gateway server embodied in hardware;
Figure 3 shows an arrangement of protocol stacks; and
Figure 4 shows an arrangement of threads in an application program and sessions in a protocol stack.

In the following example, communication is described with reference to the Wireless Application Protocol (WAP) mentioned above. It should be noted that the invention is not limited to the use of WAP and other protocols and specifications may be used.

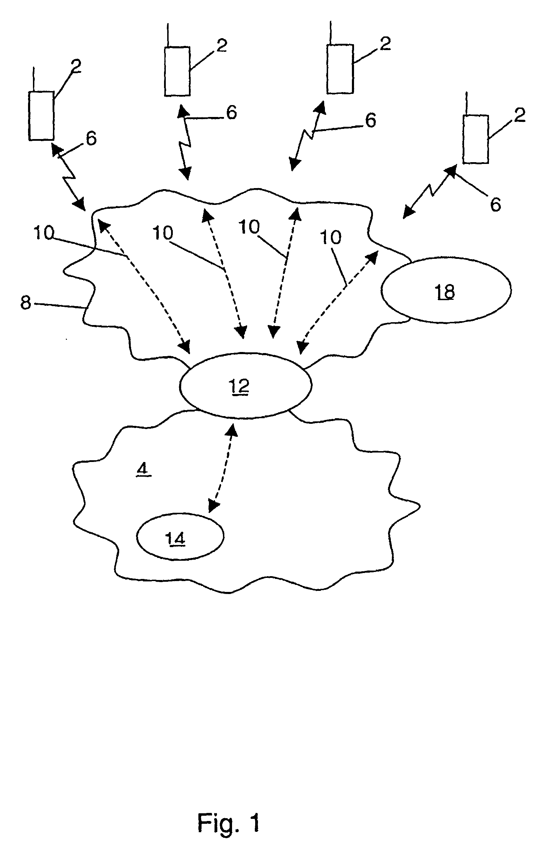

Figure 1 shows a communication system comprising a plurality of mobile terminals 2 having access to the Internet 4. The mobile terminals transmit signals 6 which are received by and transmitted through a wireless network 8. The signals comprise wireless mark-up language (WML) and WAP commands according to WAP. WML is a tag-based display language providing navigational support, data input, hyperlinks, text and image presentation, and forms. It is a browsing language similar to HMTL. Signals 10 received by the network 8 are routed to a proxy or gateway server 12. The server 12 translates WAP requests into HTTP requests and thus allows the mobile terminals 2 to request information from a web server 14 and thus browse the Internet 4. Information obtained from the web server 14 is encoded by the gateway into a suitable format and then transmitted by the wireless network to the mobile terminal 2 which requested it. The mobile terminal 2 processes and uses the information. If the web server 14 provides content in WAP/WML format, the server 12 can retrieve such content directly from the web server 14. However, if the web server provides content in WWW format (such as HTML), a filter may be used to translate the content from WWW format to WAP/WML format.

The Wireless Application Protocol is applicable to a number of different systems including GSM-900, GSM-1800, GSM-1900, CDMA IS-95, TDMA IS-136, wide-band IS-95 and third generation systems such as IMT-2000, UMTS and W-CDMA.

Although Figure 1 shows information being obtained from the Internet, the gateway itself may contain the desired information. For example, the client may retrieve information from the file system of the gateway.

In addition to the web server 14, the mobile terminals may communicate with a wireless telephony application (WTA) server 18.

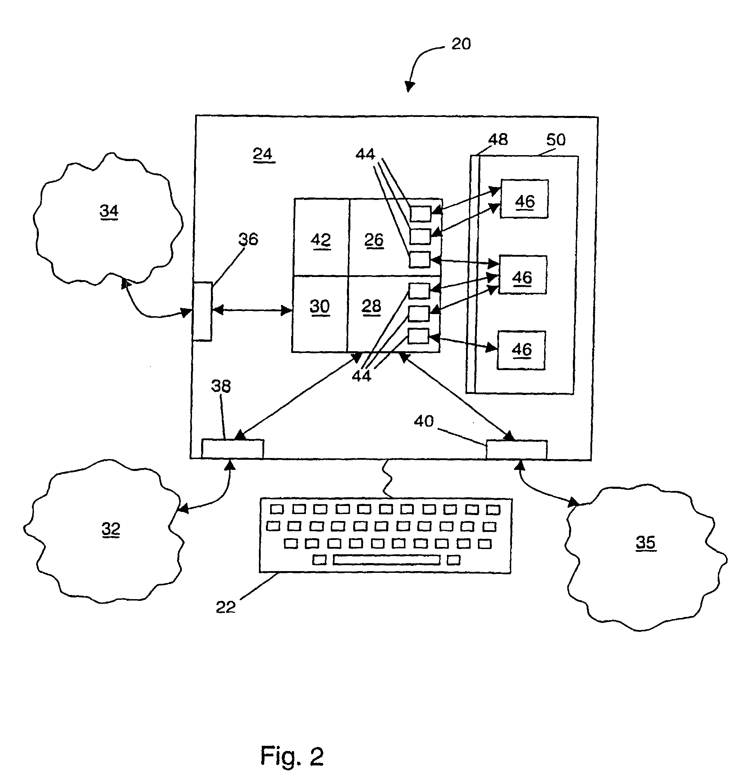

Figure 2 shows a gateway server embodied in hardware such as a computer 20. The computer 20 has dynamic memory, processing power and memory to store all of the programs needed to implement the gateway server such as the application program, the protocol stacks and the operating system. The computer 20 comprises a user interface such as a keyboard 22 and a display (not shown) and a server program 24. The server program 24 has an application program 26 for processing events of the underlying protocol, such as handling a request to retrieve WML from a server, and protocol stacks such as a WAP protocol stack 28 and a HTTP protocol stack 30. The application program 26 controls flow of data, including commands, requests and information, between the computer and various networks including a telephone network 32, the Internet 34 and a data network and circuit switched data networks 35. The computer 20 communicates with the Internet 34 through the HTTP protocol stack 30 and an interface 36. The computer 20 communicates with the telephone network 34 and the data network 35 through interfaces 38 and 40. The server program 24 also comprises an application 42 which converts between HTTP and WAP. SMS messaging may be provided via a data connection through appropriate hardware to the operator's network.

Individual threads 44 present in the application program 26 and the WAP protocol stack 28 use processors 46 in the computer 20 to carry out necessary processing tasks. Allocation of threads to processors is provided by threading services 48 present within the operating system 50 of the computer 20.

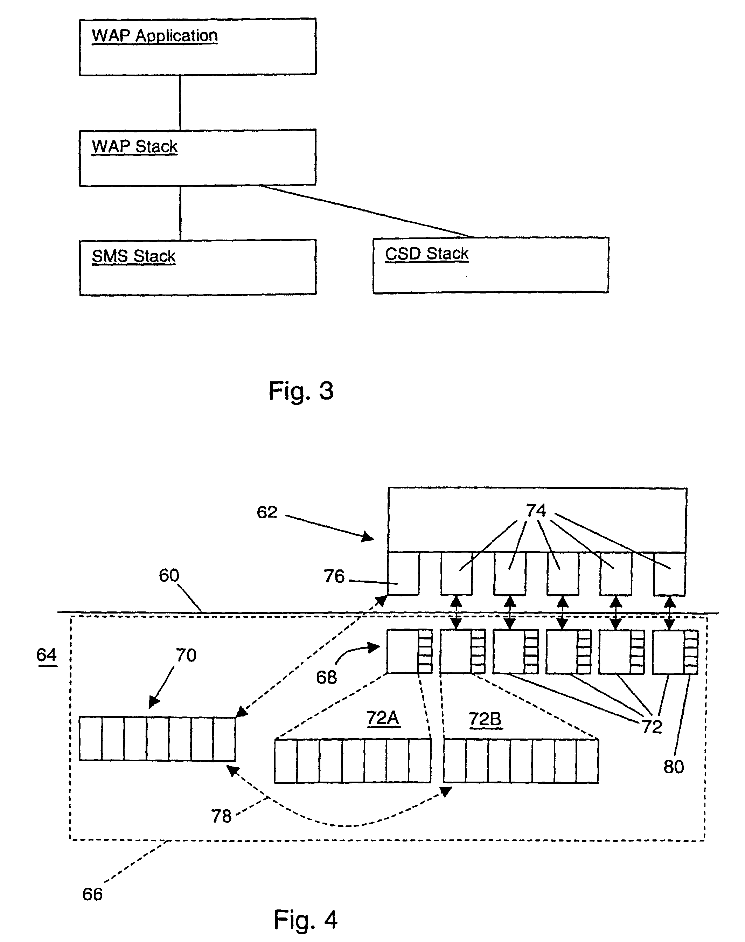

It wilt be understood that the WAP stack is built on top of so-called bearers (which provide datagram services). These bearers can be, for example, SMS or CSD. The bearers have their own protocol and are implemented through protocol stack implementations. This is shown in Figure 3.

Figure 4 shows an arrangement of threads in an application program and sessions in a protocol stack. The application program, the threads, the protocol stack and the sessions are present within a server such as that described in Figure 2. As mentioned above, at any one time there can be a large number of sessions open between the gateway server and mobile terminals. For the sake of clarity only a few of these sessions are shown in Figure 4. For the sake of illustration, a boundary line 60 is shown separating the application program 62 and the protocol stack 64.

Within the protocol stack 64 there is a meta-session 66 which contains all of the sessions which are currently being dealt with by the server. The sessions are either assigned 68 or are unassigned 70. Assigned sessions 68 are arranged into a plurality of groups 72. Within the application program 62 are a number of threads 74 which handle particular groups. There is also an acceptor thread 76. In this Figure, the individual sessions of groups 72A and 72B are shown. When a session is created it is unassigned. The acceptor thread 76 receives a notification message, or a function call, and then assigns the unassigned session to a particular session group and hence to a particular thread 74 in an assignment step 78. The arrangement produces a number of separate groups, each of which is assigned to a particular thread.

Once the session has then been assigned, events of that session will be sent to, and dealt with, the thread assigned to that group. Consequently, events arising in a particular group are only dealt with by the thread assigned to it. The application can control the assignment mechanism of the sessions and select such load balancing mechanism as is desired or is appropriate, for example circular assignment. In this way, the threads are used efficiently.

Each group is provided with a queue 80 which contains events arising in that group. Since the thread to which the group is assigned is able to access the queue to deal with the events contained within it, the events connected to a particular session are dealt with in the correct order, for example suspension of a session is executed before resumption of that session. Therefore, the invention limits the risk of errors arising in events being processed concurrently.

The events can include indications and confirmations transferred between an application and the protocol stack. They can also include pseudo-events which trigger state changes within the protocol stack or within the layers of the stack. Examples of session related events and their meanings are given below:
- Connect.ind. When a client attempts to establish a session, Connect.ind is the event that the server receives which indicates what the client wants. The corresponding event in the client indicating that the server accepts the establishment of a session is Connect.cnf.
- Suspend.ind. This is the event received by a peer when the other peer wants to suspend a session.
- Resume.ind. When a client attempts to resume a session, Resume.ind is the event that the server receives which indicates what the client wants. The corresponding event in the client indicating that the server accepts the resumption of a session is Resume.cnf.
- Exception.ind. This relates to an exceptional event in the communication or in the protocol stack.
- Disconnect.ind. The session is terminated and no further communication can occur in the context of this session.

Examples of Methodlnvoke transaction related events and their meanings are given below:
- Methodlnvoke.ind. This is the event received by the server indicating that the client is requesting execution of a method (for example GET). The client receives the corresponding event MethodResult.ind.
- MethodResult.cnf. This is the event received by the server acknowledging that the client has received the result. The transaction is completed.
- MethodAbort.ind. This is the event received by one peer when the other peer requests termination of the transaction.

Confirmed push transaction related events:
- ConfirmedPush.cnf. This is the event received, typically by the server, that the other peer, typically the client, has received event ConfirmedPush.ind.
- PushAbort.ind. This is the event received by a peer to indicate that a push transaction has been aborted.

These events are described in the specification for WSP.

The sessions are long-lived and not active all the time. If a session is assigned to a group only when it is created, the distribution of sessions to groups is static. This can lead to inefficient thread utilisation. In another embodiment of the invention, the acceptor thread assigns inactive sessions to groups when they are resumed (at that point there are no any other events for that session which need to be processed). As a result more dynamic session assignment is provided and thus more efficient session management. Inactive sessions are resumed by sending a message (or event) that the session is to be resumed.

In a further embodiment, the sessions are organised into a tree hierarchy such that the sessions are organised into groups and the session groups are themselves organised into further groups. Some nodes in the session tree (session nodes) can be specified as those which handle events and other nodes can be specified as those which transfer the events to nodes in which they will be handled. This allows ready customisation of how the sessions are handled. Events flow upwardly from the sessions and are pooled in the nodes specified to handle them, and so are placed in a queue and then given to the application. Therefore each node which gets an event from below either puts it into its queue or transfers it upwards.

In a further embodiment, sessions are not assigned to particular session groups but are allocated to a range of groups. However, when activities of the session need to be dealt with, it is assigned to a particular group. For example, a session may initially be assigned to the range of groups 3, 4, 5, and 6. In dealing with a particular activities, for example particular events, the session is assigned to group 4 and all of its events are put into group 4. The session then becomes inactive for a while, that is, it does not generate any events. When the session becomes active again, it may be assigned to another group of its range 3, 4, 5 and 6, for example the least loaded group. The least active group can be selected by the protocol stack automatically. If this is group 5 the session is assigned to group on reactivation. In this way, the session is not fixed to a particular group and can switch between groups.

The connection set-up request or the session request (also referred to as connect indications) can also be assigned to a range of groups. It is referred in the WSP specification as S-Connect.ind abstract primitive. This embodiment allows efficient use of threads and rapid assignment of sessions. Furthermore, it eliminates the need for a special (acceptor) thread. In this embodiment selection is done by the stack itself in choosing the range of groups for a particular session. It should be noted that in this embodiment, the application cannot control the assignment of sessions to particular groups, for example to select the least loaded group and the implementation of the protocol stack is more complex. Notifications which are handled by the acceptor thread in the other embodiments will be produced in groups and are handled by regular working threads.

In yet a further embodiment, instead of having threads to invoke blocking functions to handle events, the processing of events can be based on call-backs. In this case, the protocol stack itself invokes a function in the application thread to deliver the event.

The invention is located in the Application Programming Interface (API). Referring to Figure 2, the API is present between the application program 26 and the WAP protocol stack 28. The API provides the protocol services to the application. The API is a concrete way for the application to receive events from the protocol and to invoke the service primitives of the protocol.

The invention is particularly suited for protocol implementations in which:
(i) the protocol entity generates such events that must be processed in the order of their generation, that is their processing cannot be made parallel;
(ii) the application built on top of the implementation is multi-threaded;
(iii) there are long living protocol entities with long inactive periods which makes it difficult to afford one thread for each entity.

Particular implementations and embodiments have been described. It will be clear to a person skilled in the art that the invention is not restricted to details of embodiments presented above, and can be implemented in other embodiments without deviating from the characteristics of the invention. For example, although the foregoing is a description of mobile terminals browsing the Internet, it is to be understood that the communication may be of different types including sending and receiving information, conducting transactions such as financial transactions sending and receiving electronic mail or messages. The range of activities includes accessing services, for example weather reports, news, stock prices, flight schedules, downloading ringing tones, banking services including information provision and payments. It may occur in communications environments other than the Internet. The scope of the invention is only restricted by the attached patent claims. Equivalent implementations are also within the scope of the invention.

## Claims

1. A method of managing a plurality of sessions (66) the sessions being between a plurality of terminals (2) and a server (20) having a plurality of threads (74), the method comprising:
grouping the sessions into a plurality of groups (72); and
assigning a thread (74) to each group (72) of sessions so that the assigned thread (74) only handles the events of that group of sessions.

2. A method according to claim 1 in which grouping occurs when a session is created (70).

3. A method according to claim 1 in which grouping occurs when a session becomes active.

4. A method according to any preceding claim in which one group (72) is provided for each thread (74) so that there are equal numbers of groups (72) and threads (74).

5. A method according to any preceding claim in which sessions are assigned statically to particular threads (74).

6. A method according to any of claims 1 to 4 in which a session is put into a first group in a first time period before suspension and put into a second group in a second time period following resumption.

7. A method according to claim 6 in which the second group is chosen on the basis of the relative levels of activity of the groups.

8. A method according to claim 6 in which the second group is chosen randomly.

9. A method according to any preceding claim in which each group (72) has a queue (80) and each session puts its events into that queue (80).

10. A method according to any preceding claim in which the sessions are grouped by a thread referred to as an acceptor thread (76).

11. A method according to claim 10 in which the acceptor thread (76) calls a function which is answered by notification that a new session has been created and then assigns the new session to a particular session group (72).

12. A method according to any preceding claim in which the sessions are long-lived.

13. A method according to any preceding claim in which the terminals (2) comprise mobile terminals.

14. A method according to claim 13 in which the terminals (2) comprise cellular telephones.

15. A method according to any preceding claim in which load balancing means is included in the assignment mechanism of the session.

16. A method according to any preceding claim in which the sessions (66) involve obtaining information or conducting transactions through the Internet.

17. A method according to any preceding claim in which the sessions are part of the Wireless Session Protocol (WSP).

18. A server (20) for managing a plurality of sessions with a plurality of terminals (2) the server (20) comprising a plurality of threads (74), grouping means to group the sessions into a plurality of groups and assigning means to assign a thread to each group of sessions so that the assigned thread (74) only handles the events of that group (72) of sessions.

19. A server (20) according to claim 18 comprising a gateway server serving a plurality of mobile terminals (2).

20. A server (20) according to claim 19 comprising a WAP-HTTP gateway.

21. A communications system comprising a server (20) and a plurality of terminals (2) the server (20) and the terminals (2) conducting a plurality of sessions (66) the server comprising a plurality of threads (74), grouping means to group the sessions into a plurality of groups and assigning means to assign at least one thread to each group of sessions so that the assigned thread (74) only handles the events of that group (72) of sessions.

22. A computer program product for managing a plurality of sessions (66) the sessions being between a plurality of terminals (2) and a server (20) having a plurality of threads (74), comprising:
computer readable program means for grouping the sessions (66) into a plurality of groups (72); and
computer readable program means for assigning a thread to each group (72) of sessions so that the assigned thread (74) only handles the events of that group (72) of sessions.

## Patentansprüche

1. Verfahren zum Verwalten mehrerer Sitzungen (66), die zwischen mehreren Terminals (2) und einem Server (20) mit mehreren Threads (74) erfolgen, wobei das Verfahren umfaßt:
Gruppieren der Sitzungen in mehreren Gruppen (72); und
Zuweisen eines Threads (74) an jede Gruppe (72) von Sitzungen, so daß der zugewiesene Thread (74) lediglich die Ereignisse dieser Gruppe von Sitzungen behandelt.

2. Verfahren nach Anspruch 1, bei dem das Gruppieren erfolgt, wenn eine Sitzung erzeugt wird (70).

3. Verfahren nach Anspruch 1, bei dem das Gruppieren erfolgt, wenn eine Sitzung aktiv wird.

4. Verfahren nach einem vorhergehenden Anspruch, bei dem für jeden Thread (74) eine Gruppe (72) vorgesehen ist, so daß gleiche Anzahlen von Gruppen (72) und Threads (74) vorhanden sind.

5. Verfahren nach einem vorhergehenden Anspruch, bei dem Sitzungen statisch an bestimmte Threads (74) zugewiesen werden.

6. Verfahren nach einem der Ansprüche 1 bis 4, bei dem eine Sitzung in einer ersten Zeitperiode vor der Beendigung in eine erste Gruppe gesetzt wird und in einer zweiten Zeitperiode nach der Wiederaufnahme in eine zweite Gruppe gesetzt wird.

7. Verfahren nach Anspruch 6, bei dem die zweite Gruppe auf Grundlage der relativen Aktivitätspegel der Gruppen ausgewählt wird.

8. Verfahren nach Anspruch 6, bei dem die zweite Gruppe willkürlich ausgewählt wird.

9. Verfahren nach einem vorhergehenden Anspruch, bei dem jede Gruppe (72) eine Warteschlange (80) besitzt und jede Sitzung ihre Ereignisse in diese Warteschlange (80) setzt.

10. Verfahren nach einem vorhergehenden Anspruch, bei dem die Sitzungen durch einen Thread gruppiert werden, der als Empfänger-Thread (Acceptor-Thread) (76) bezeichnet wird.

11. Verfahren nach Anspruch 10, bei dem der Empfänger-Thread (76) eine Funktion aufruft, die durch die Benachrichtigung beantwortet wird, daß eine neue Sitzung erzeugt wurde, und anschließend die neue Sitzung einer bestimmten Sitzungsgruppe (72) zuweist.

12. Verfahren nach einem vorhergehenden Anspruch, bei dem die Sitzungen lang andauernd sind.

13. Verfahren nach einem vorhergehenden Anspruch, bei dem die Terminals (2) mobile Terminals enthalten.

14. Verfahren nach Anspruch 13, bei dem die Terminals (2) Zellentelephone enthalten.

15. Verfahren nach einem vorhergehenden Anspruch, bei dem in dem Zuweisungsmechanismus der Sitzung Lastausgleichsmittel enthalten sind.

16. Verfahren nach einem vorhergehenden Anspruch, bei dem die Sitzungen (66) das Erlangen von Informationen oder das Ausführen von Transaktionen durch das Internet enthalten.

17. Verfahren nach einem vorhergehenden Anspruch, bei dem die Sitzungen Teil des Wireless Session Protocol (WSP) sind.

18. Server (20) zum Verwalten mehrerer Sitzungen mit mehreren Terminals (2), wobei der Server (20) mehrere Threads (74), Gruppierungsmittel zum Gruppieren der Sitzungen in mehrere Gruppen und Zuweisungsmittel zum Zuweisen eines Threads an jede Gruppe aus Sitzungen enthält, so daß der zugewiesene Thread (74) lediglich die Ereignisse dieser Gruppe (72) von Sitzungen behandelt.

19. Server (20) nach Anspruch 18, mit einem Gatewayserver, der mehrere mobile Terminals (2) versorgt.

20. Server (20) nach Anspruch 19, der ein WAP-HTTP-Gateway enthält.

21. Kommunikationssystem mit einem Server (20) und mehreren Terminals (2), wobei der Server (20) und die Terminals (2) mehrere Sitzungen (66) durchführen, wobei der Server mehrere Threads (74), Gruppierungsmittel zum Gruppieren der Sitzungen in mehrere Gruppen und Zuweisungsmittel zum Zuweisen wenigstens eines Threads an jede Gruppe aus Sitzungen umfaßt, so daß der zugewiesene Thread (74) lediglich die Ereignisse dieser Gruppe (72) von Sitzungen behandelt.

22. Computerprogrammprodukt zum Verwalten mehrerer Sitzungen (66), wobei die Sitzungen zwischen mehreren Terminals (2) und einem Server (20) mit mehreren Threads (74) erfolgen, umfassend:
computerlesbare Programmittel zum Gruppieren der Sitzungen (66) in mehrere Gruppen (72); und
computerlesbare Programmittel zum Zuweisen eines Threads an jede Gruppe (72) von Sitzungen, so daß der zugewiesene Thread (74) lediglich die Ereignisse dieser Gruppe (72) von Sitzungen behandelt.

## Revendications

1. Procédé de gestion d'une pluralité de sessions (66), les sessions étant entre une pluralité de terminaux (2) et un serveur (20) ayant une pluralité de chaînes (74), le procédé comprenant les systèmes consistant à :
grouper les sessions en une pluralité de groupes (72) ;et
affecter une chaîne (74) à chaque groupe (72) de sessions de sorte que la chaîne (74) affectée ne manipule que les événements de ce groupe de sessions.

2. Procédé selon la revendication 1, dans lequel le groupage se produit lorsqu'une session est créée (70).

3. Procédé selon la revendication 1, dans lequel le groupage se produit lorsqu'une session devient active.

4. Procédé selon l'une quelconque des revendications précédentes, dans lequel un groupe (72) est prévu pour chaque chaîne (74) de sorte qu'il existe des nombres pairs de groupes (72)et de chaînes (74).

5. Procédé selon l'une quelconque des revendications précédentes, dans lequel les sessions sont affectées statiquement à des chaînes particulières (74).

6. Procédé selon l'une quelconque revendications 1 à 4, dans lequel une session est placée dans un premier groupe pendant une première période de temps avant suspension et placée dans un second groupe pendant une seconde période de temps après reprise.

7. Procédé selon la revendication 6, dans lequel le second groupe est choisi sur la base des niveaux relatifs d'activités des groupes.

8. Procédé selon la revendication 6, dans lequel le second groupe est choisi de manière aléatoire.

9. Procédé selon l'une quelconque des revendications précédentes, dans lequel chaque groupe (72) comporte une file d'attente (80) et chaque session place ces événements dans cette file d'attente (80).

10. Procédé selon l'une quelconque des revendications précédentes, dans lequel les sessions sont groupées par une chaîne appelée chaîne acceptrice (76).

11. Procédé selon la revendication 10, dans lequel la chaîne acceptrice (76) appelle une fonction à laquelle il est répondu par notification qu'une nouvelle session a été créée puis affecte la nouvelle session à un groupe de sessions particulier (72).

12. Procédé selon l'une quelconque des revendications précédentes, dans lequel les sessions sont des sessions à logue durée.

13. Procédé selon l'une quelconque des revendications précédentes, dans lequel les terminaux (2) comprennent des terminaux mobiles.

14. Procédé selon la revendication 13, dans lequel les terminaux (2) comprennent des téléphones cellulaires.

15. Procédé selon l'une quelconque des revendications précédentes, dans lequel un moyen d'éliquibrage de charge est inclus dans le mécanisme d'affectation de la session.

16. Procédé selon l'une quelconque des revendications précédentes, dans lequel les sessions (66) impliquent l'obtention d'informations ou la conduite des transactions par l'intermédiaire d'Internet.

17. Procédé selon l'une quelconque des revendications précédentes, dans lequel les sessions sont une partie du protocole de session sans fil (WSP).

18. Serveur (20) pour gérer une pluralité de sessions avec une pluralité de terminaux (2), le serveur (20) comprenant une pluralité de chaînes (74), des moyens de groupage pour grouper les sessions en une pluralité de groupes et des moyens d'affectation pour affecter une chaîne à chaque groupe de sessions de sorte que la chaîne affectée (74) traite seulement les événements de ce groupe (72) de sessions.

19. Serveur (20) selon la revendication 18, comprenant un serveur passerelle servant une pluralité de terminaux mobiles (2).

20. Serveur (20) selon la revendication 19, comprenant une passerelle WAP-HTTP.

21. Système de communication comprenant un serveur (20) et une pluralité de terminaux (2), le serveur (20) et les terminaux (2) conduisant une pluralité de sessions (66), le serveur comprenant une pluralité de chaînes (74), des moyens de groupage pour grouper les sessions en une pluralité de groupes et des moyens d'affectation pour affecter au moins une chaîne à chaque groupe de sessions de sorte que la chaîne affectée (74) ne traite que les événements de ce groupe (72) de sessions.

22. Produit de programme d'ordinateur pour gérer une pluralité de sessions (66), les sessions étant entre une pluralité de terminaux (2) et un serveur (20) ayant une pluralité de chaînes (74), comprenant :
un moyen de programme lisible par ordinateur pour grouper les sessions (66) en une pluralité de groupes (72) ; et
un moyen de programme lisible par ordinateur pour affecter une chaîne à chaque groupe (72) des sessions de sorte que la chaîne affectée (74) ne traite que les événements de ce groupe (72) de sessions.
